**Europäisches Patentamt**

**European Patent Office**

**Office européen des brevets**

(19)

(11) **EP 1 003 294 A2**

(12) **EUROPÄISCHE PATENTANMELDUNG**

(43) Veröffentlichungstag:
24.05.2000 Patentblatt 2000/21

(51) Int Cl.7: **H04B 3/54**

(21) Anmeldenummer: **99811009.2**

(22) Anmeldetag: **04.11.1999**

| | |
|---|---|
| (84) Benannte Vertragsstaaten:<br>**AT BE CH CY DE DK ES FI FR GB GR IE IT LI LU MC NL PT SE**<br>Benannte Erstreckungsstaaten:<br>**AL LT LV MK RO SI**<br><br>(30) Priorität: **19.11.1998 DE 19853348**<br><br>(71) Anmelder: **ABB RESEARCH LTD.**<br>**8050 Zürich (CH)** | (72) Erfinder: **Dzung, Dacfey, Dr.**<br>**5430 Wettingen (CH)**<br><br>(74) Vertreter: **Clerc, Natalia et al**<br>**ABB Business Services Ltd,**<br>**Intellectual Property (SLE-I),**<br>**Haselstrasse 16/699**<br>**5401 Baden (CH)** |

(54) **Verfahren zur Signalübertragung über Stromversorgungsleitungen**

(57) Zum Übertragen von Signalen über eine Stromversorgungsleitung speisen mehrere Sender (TX1, TX2) Sendesignale in die Hochspannungsleitung ein. Die Sendesignale werden mit unterschiedlichen Gewichten je in mehrere der Leiter (1,2,3) der Stromversorgungsleitung eingekoppelt. Ein Empfänger (RX1) koppelt die Signale aus den Leitern (1,2,3) aus und verknüpft sie derart, dass er eines der Sendesignale rekonstruiert. Der Einfluss der übrigen Sendesignale auf das Signal beim Empfänger kann dank der Übertragung über mehrere Leiter eliminiert werden. Dies erlaubt es, dass mehrere Sender ohne Bandaufteilung die gleiche Leitung als Übertragungskanal einsetzen.

**Fig. 1**

**Beschreibung**

Technisches Gebiet

Die Erfindung betrifft ein Verfahren zum Übertragen von Signalen über eine Stromversorgungsleitung, insbesondere eine Hoch- oder Mittelspannungsleitung, gemäss Oberbegriff von Anspruch 1.

Stand der Technik

Sogenannte Power Line Carrier (PLC) Systeme zur Signalübertragung über Hoch-, Mittel- oder Niederspannungsleitungen sind wohlbekannt. In der Regel verwenden sie FDMA-Verfahren (Frequency Division Multiple Access) und sog. "Line Traps", um die einzelnen Übertragungswege voneinander zu trennen, was jedoch zu einer Reduktion der Übertragungskapazität und/oder zu zusätzlichem Schaltungsaufwand führt.

Darstellung der Erfindung

Es ist deshalb Aufgabe der Erfindung, ein Verfahren der eingangs genannten Art bereitzustellen, das diese Probleme zumindest teilweise löst.

Diese Aufgabe wird vom Verfahren gemäss Anspruch 1 gelöst.

Indem die Sender die Sendesignale je in mehrere der Leiter einkoppeln, wird es möglich, empfängerseitig die Signale der verschiedenen Sender durch rechnerische Verknüpfung der Empfangssignale aus den einzelnen Leitern zu trennen.

Vorzugsweise werden die Sendesignale der unterschiedlichen Sender voneinander getrennt, indem der Empfänger eine gewichtete Linearkombination der Empfangssignale bildet. Die Gewichte, die bei der Einkopplung und der Auskopplung eingesetzt werden, können derart gewählt werden, dass der Erwartungswert der Fehler im ausgekoppelten Signal minimal ist.

Um eine möglichst gute Trennung der Signale zu erhalten, können in einer Kalibrierungsphase die Transferfunktionen zwischen den Sendern und dem Empfänger ermittelt werden. Aus diesen Transferfunktionen lassen sich z.B. die zu verwendenden Gewichte beim Ein- und Auskoppeln ermitteln.

Kurze Beschreibung der Zeichnungen

Weitere Vorteile und Anwendungen der Erfindung ergeben sich aus den abhängigen Ansprüchen und aus der nun folgenden Beschreibung anhand der Figuren. Dabei zeigen:

Fig. 1 einen Ausschnitt einer Stromleitung mit mehreren Sendern und einem Empfänger zur Übermittlung von Signalen,
Fig. 2 einen Sender des Netzes von Fig. 1 und
Fig. 3 den Empfänger des Netzes von Fig. 1.

Weg zur Ausführung der Erfindung

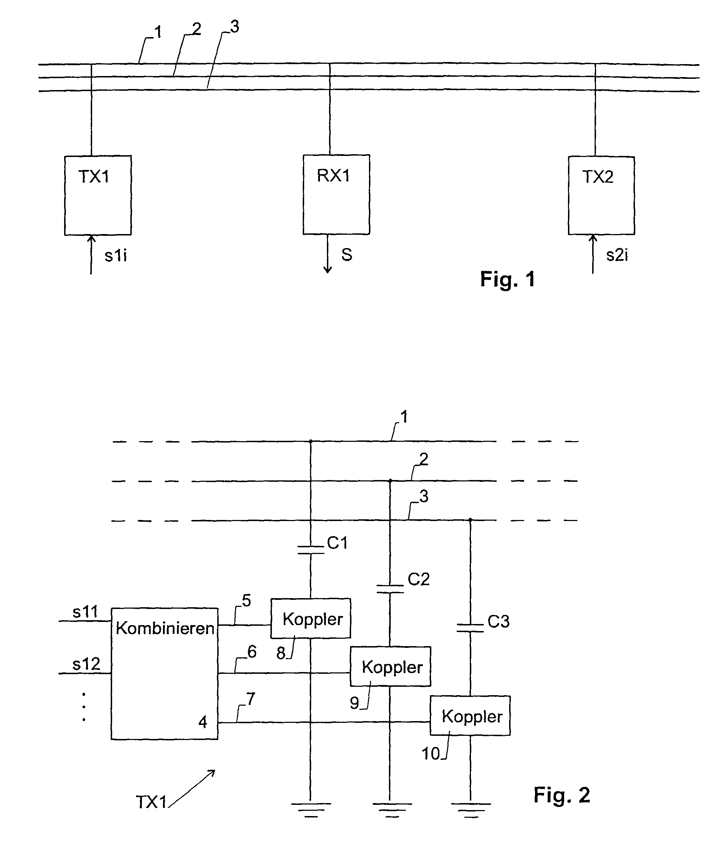

Fig. 1 zeigt eine Stromversorgungsleitung mit z.B. drei Leitern 1, 2, 3. Entlang der Leitung sind zwei Sender TX1, TX2 und ein Empfänger RX1 angeordnet. Weitere Sender und Empfänger können vorgesehen sein, sind in der Figur aber nicht dargestellt.

Jedem Sender TXi wird mindestens ein Sendesignal zugeführt, dass er übertragen soll. Im allgemeinsten Fall werden jedem Sender TXi mehrere Sendesignale $s_{i1}, ... s_{ik}$ zugeführt, welche er an die Empfänger RX1 .. RXk zu übertragen hat.

Die Sendesignale $s_{ij}$ werden in unten beschriebener Weise in die Stromversorgungsleitung eingekoppelt. Dies führt dazu, dass am Ort des Empfängers RX1 in der Regel mehr als ein Signal auf der Stromversorgungsleitung vorhanden ist. Aufgabe des Empfängers RX1 ist es nun, mindestens eines davon zu demodulieren und als Ausgangssignal S bereitzustellen.

In der gezeigten Ausführung sind die Sender und Empfänger räumlich getrennt. In der Praxis kann jedoch z. B. auch beim Empfänger ein weiterer Sender angeordnet sein. Es ist auch denkbar, dass die Stromversorgungsleitung eine kompliziertere Geometrie als die in Fig. 1 gezeigte besitzt und z.B. Verzweigungen aufweist. Ferner sind in der Regel an verschiedenen Orten der Stromversorgungsleitung sog. "Line Traps" angeordnet, welche eine Ausbreitung der PLC-Signale in gewisse Teile des Netzes verhindern.

Der Aufbau eines Senders, z.B. TX1, ist aus Fig. 2 ersichtlich. Die Sendesignale $s_{11}$, $s_{12}$, ... werden einer

Kombinationsschaltung 4 zugeführt, deren Funktion weiter unten beschrieben wird und die für jeden Leiter 1, 2, 3 der Stromversorgungsleitung ein Signal 5, 6, 7 erzeugt. Dieses wird über konventionelle Koppler 8, 9, 10 mit Koppelkondensatoren C1, C2, C3 in die Leiter 1, 2 bzw. 3 eingekoppelt.

Vor der Einkopplung können die Signale einer Trägerfrequenz von z.B. einigen 100 kHz aufmoduliert werden. Dies kann entweder bereits vor der Kombinationsschaltung 4 oder zwischen der Kombinationsschaltung 4 und den Kopplern 8, 9, 10 geschehen. Im Rahmen der vorliegenden Erfindung ist es insbesondere auch möglich, dass die verschiedenen Sender TX1, TX2 die gleiche Trägerfrequenz benutzen.

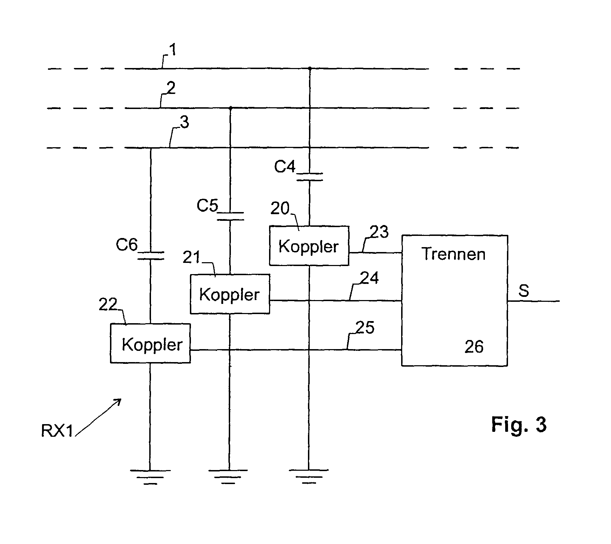

Der Aufbau des Empfängers RX1 ergibt sich aus Fig. 3. Er greift die Signale aus den drei Leitern 1, 2, 3 über Koppler 20, 21, 22 mit Koppelkondensatoren C4, C5, C6 ab und führt sie über drei Leitungen 23, 24, 25 einer Trennschaltung 26 zu. In der Trennschaltung 26 werden in der weiter unten beschriebenen Weise die ausgekoppelten Empfangssignale verknüpft, um mindestens eines der Sendesignale zu rekonstruieren und ein Ausgangssignal S zu erzeugen.

Die Sender TXi sind dazu ausgestaltet, in der Kombinationsschaltung 4 die Modulationssignale für die Leiter aus einer Linearkombination des Sendesignale $s_{ij}$ zu erzeugen. Bezeichnet der Vektor $\mathbf{x}_i = \{x_{i,1}, x_{i,2}, x_{i,3}\}$ die Modulationsamplituden auf den einzelnen Leitern 1, 2, 3, so gilt für den Sender TXi:

$$x_i(t) = w_{i1} \cdot s_{i1} + w_{i2} \cdot s_{i2} + \ldots , \tag{1}$$

wobei $\mathbf{w}_{ij}$ die Einkopplungsgewichte des Senders TXi für das Sendesignal bestimmt für Empfänger j sind.

Bezeichnet der Vektor $\mathbf{y}_i = \{y_{i,1}, y_{i,2}, Y_{i,3}\}$ die Modulationsamplituden bzw. Empfangssignale auf den einzelnen Leitern 1, 2, 3 beim Empfänger RXi, so gilt

$$y_i(t) = H_{1,i} \cdot x_1(t) + H_{2,i} \cdot x_2(t) + \ldots + n_i(t), \tag{2}$$

wobei $H_{j,i}$ die Übertragungsfunktion zwischen Sender TXj und Empfänger RXi bezeichnet und $\mathbf{n}_i$ das Rauschen beim Empfänger RXi. Im linearen Fall und bei fehlender Dispersion ist jede Übertragungsfunktionen $\mathbf{H}_{j,i}$ eine Matrix.

Der Empfänger RXi errechnet sein Ausgangssignal S aus einer linearen Kombination der Empfangssignale $\mathbf{y}_i$ auf den Leitern 1, 2, 3:

$$S(t) = g \cdot y_i , \tag{3}$$

wobei $\mathbf{g} = \{g_1, g_2, g_3\}$ die Auskopplungsgewichte sind. Die Werte von $\mathbf{g}$ sind so gewählt, dass das Ausgangssignal S möglichst genau dem zu empfangenden Sendesignal $s_{ij}$ entspricht.

Für die folgende Diskussion nehmen wir an, dass das System zwei Sender TX1, TX2 besitzt, deren Signale am Ort des Empfängers RX1 interferieren. TX1 sende zwei Sendesignale aus, nämlich $s_{11}$ (das Signal, das der Empfänger RX1 empfangen soll) und $s_{12}$ (ein Signal, das an einen anderen Empfänger gerichtet ist). TX2 sendet ein weiteres Signal $s_{23}$ aus, das an einen anderen Empfänger gerichtet ist aber am Ort des Empfängers RX1 auch empfangen wird.

In diesem Falle folgt aus (1) bis (3) für das Ausgangssignal S von RX1:

$$S(t) = g \cdot H_{1,1} \cdot w_{11} \cdot s_{11}(t) +$$

$$g \cdot H_{1,1} \cdot w_{12} \cdot s_{12}(t) +$$

$$g \cdot H_{2,1} \cdot w_{23} \cdot s_{23}(t) +$$

$$n_1(t) \tag{4}$$

Die Parameter in (4) sind nun so zu wählen, dass das Ausgangssignal S(t) möglichst genau dem Sendesignal $s_{11}(t)$ entspricht. Hierzu gibt es verschiedene Möglichkeiten:

a) Die Auskopplungsgewichte $\mathbf{g}$ können so gewählt werden, dass

$$g \cdot H_{1,1} \cdot w_{11} = 1 \, ,$$
$$g \cdot H_{1,1} \cdot w_{12} = 0 \text{ und} \qquad\qquad (5)$$
$$g \cdot H_{2,1} \cdot w_{23} = 0 \, .$$

Diese Lösung ist jedoch nicht ideal, wenn das Rauschen $n_1$ in Gleichung (4) nicht vernachlässigt werden darf, da sie zu einer Rauscherhöhung führen kann.

b) In einer robusteren Lösung werden die Kopplungswerte **g** so gewählt, dass der Erwartungswert von

$$\left| S - s_{11} \right|^2 \qquad\qquad (6)$$

minimal wird, wobei der Erwartungswert über die statistische Verteilung aller $s_{ij}$ und $n_1$ errechnet wird.

Die Empfangssignale **y**$_1$ können jedoch auch auf andere Weise rechnerisch aufbereitet werden, um das gewünschte Sendesignal $s_{11}$ zu ermitteln. Insbesondere kann hierzu im Falle digitaler Modulation der sog. "Maximum Likelihood Sequence Estimator (MLSE)" verwendet werden. Hierbei wird aus den gemessenen Empfangssignalen **y**$_i$ und den als bekannt vorausgesetzten Werten von **H**$_{i,j}$ und **w**$_{ij}$ diejenige Sequenz $s_{11}(t)$ gesucht, für die der Wert von

$$\left| y_1(t) - H_{1,1} \cdot w_{11} \cdot s_{11}(t) \right|^2 \qquad\qquad (7)$$

minimal ist.

Lösungsverfahren zu den oben erwähnten Problemen werden eingehender in "Space-Time processing for wireless communications", von A.J. Paulraj und C.B. Papadias in IEEE Signal Processing Magazine, November 1997, Seiten 49-83 beschrieben.

Die Lösung der Gleichungen (5) - (7) setzt voraus, dass die Transferfunktionen **H**$_{i,j}$ bekannt sind. Diese Funktionen können aufgrund theoretischer Überlegungen aus der Konfiguration der Leiter 1, 2, 3 abgeschätzt werden. Vorzugsweise werden sie aber in einer Kalibrierungsphase gemessen. Da das System sich nicht oder nur langsam ändert, genügt es, solche Kalibrierungsphasen sporadisch durchzuführen.

Die beste Wahl der Einkopplungsgewichte **w**$_{ij}$ hängt vom Algorithmus des Empfängers ab. Vorzugsweise erfolgt die Wahl aufgrund einer globalen Optimierung des Systems, deren Ziel es ist, die Fehlerraten der einzelnen Verbindungen zu minimieren.

Dank der Wählbarkeit der Einkopplungsgewichte **w**$_{ij}$ erhält der Ingenieur bei der Planung des Systems zusätzliche Freiheitsgrade. Selbst im Falle singulärer Transferfunktionen **H**$_{i,j}$ können in der Regel noch Werte gefunden werden, die stabile Lösungen erlauben.

In netzartigen Systemen mit einer Vielzahl von Verbindungen werden die Einkopplungsgewichte **w**$_{ij}$ vorzugsweise in einem globalen Optimierungsverfahren gewählt. Die Gewichte können z.B. so gewählt werden, dass die Erwartungswerte der Fehlerraten aller verwendeten Verbindungswege minimal werden.

Bei breitbandigen Übertragungen ist es möglich, dass die Transferfunktionen **H**$_{i,j}$ nicht mehr als frequenzunabhängig betrachtet werden können. In diesem Falle können in den obigen Gleichungen die entsprechenden Multiplikationen durch Faltungen ersetzt werden. Alternativ hierzu können die Gleichungen in obiger Form zur Darstellung der Verhältnisse in einzelnen Frequenzbändern eingesetzt werden, was insbesondere bei Verwendung mehrerer Trägerfrequenzen eine separate Behandlung jedes Frequenzbands erlaubt.

Die obige Diskussion gilt, soweit nicht anders ausgeführt, für analoge und digitale Sendesignale **s**$_{ij}(t)$. Im Falle digitaler Datenübertragung mit

$$s_{ij}(t) = \Sigma\, s_{ij,k} \cdot p(t - kT),$$

wobei $s_{ij,k}$ die Datensymbole, $p(t)$ den Modulationspuls und T die Symbollänge beschreiben, können die Werte von $s_{ij,k}$ direkt bestimmt werden. Dies ist in "Space-Time processing for wireless communications" von A.J. Paulraj und C. B. Papadias in IEEE Signal Processing Magazine, November 1997, Seiten 49-83 beschrieben.

Bezugszeichen:

1, 2, 3: Leiter der Stromversorgungsleitung
4: Kombinationsschaltung
5, 6, 7: Signalleitungen von der Kombinationsschaltung
8, 9, 10: Koppler des Senders
20, 21, 22: Koppler des Empfängers
23, 24, 25: Signalleitungen zur Trennschaltung
26: Trennschaltung
C1 - C6: Koppelkondensatoren
**g**: Auskopplungsgewichte
**H**: Transferfunktionen
**n**: Rauschen
RX1, RXi: Empfänger
$s_{ij}$: Sendesignale
$s_{ij,k}$: Datensymbole
S: Ausgangssignal des Empfängers
T: Symbollänge
TX1, TX2, TXi: Sender
**w**: Einkopplungsgewichte
**x**: Modulationsamplituden beim Sender
**y**: Empfangssignale


**Patentansprüche**

1. Verfahren zum Übertragen von Signalen über eine Stromversorgungsleitung, insbesondere eine Hochoder Mittelspannungsleitung, mit mehreren Leitern (1,2,3), bei welchem mehrere Sender (TX1, TX2) Sendesignale ($s_{ij}$) in die Hochspannungsleitung einkoppeln und ein Empfänger (RX1) mindestens eines der Sendesignale ($s_{ij}$) aus der Hochspannungsleitung auskoppelt, dadurch gekennzeichnet,

   dass die Sender (TX1, TX2) die Sendesignale je in mehrere der Leiter (1,2,3) einkoppeln,
   dass der Empfänger (RX1) aus mehreren der Leiter (1,2,3) je ein Empfangssignal ($y_{ij}$) auskoppelt und
   dass der Empfänger (RX1) mindestens eines der Sendesignale ($s_{ij}$) aus den Empfangssignalen ($y_{ij}$) herleitet, indem er die Empfangssignale ($y_{ij}$) rechnerisch miteinander verknüpft.

2. Verfahren nach Anspruch 1, dadurch gekennzeichnet, dass jedes Sendesignal ($s_{ij}$) mit Einkopplungsgewichten ($\mathbf{w}_i$) linear in die Leiter (1,2,3) eingekoppelt wird.

3. Verfahren nach einem der vorangehenden Ansprüche, dadurch gekennzeichnet, dass die auf den verschiedenen Leitern (1,2,3) empfangenen Empfangssignale ($y_{ij}$) beim Empfänger (RX1) mit Auskopplungsgewichten (**g**) linear miteinander kombiniert werden.

4. Verfahren nach den Ansprüchen 2 und 3, dadurch gekennzeichnet, dass die Auskopplungsgewichte (**g**) zur Auskopplung eines gewünschten Sendesignals derart gewählt werden, dass der Erwartungswert von

$$\left| S - s_{11} \right|^2$$

   minimal ist, wobei S das mit den Auskopplungsgewichten ($\mathbf{g}_i$) aus den Empfangssignalen kombinierte empfangene Signal und $s_{11}$ das gewünschte Sendesignal sind, und wobei der Erwartungswert über die zu erwartende Verteilung der Sendesignale und des Rauschens des Systems gebildet wird.

5. Verfahren nach Anspruch 2, dadurch gekennzeichnet, dass zur Ermittlung des Sendesignals dasjenige Sendesignal $s_{11}(t)$ gesucht wird, für welches der Wert von

$$\left| y_1(t) - H_{1,1} \cdot w_{11} \cdot s_{11}(t) \right|^2$$

minimal wird, wobei $y_i(t)$ der Vektor der Empfangssignale beim Empfänger (RX1), $H_{1,1}$ die Übertragungsfunktion zwischen dem das Sendesignal erzeugenden Sender (TX1) und dem Empfänger (RX1) und $w_{11}$ die Einkopplungsgewichte des das Sendesignal erzeugenden Senders (TX1) sind.

6. Verfahren nach einem der vorangehenden Ansprüche, dadurch gekennzeichnet, dass in einer Kalibrierungsphase Transferfunktionen ($H_{ij}$) zwischen den Sendern (TX1, TX2) und dem Empfänger (RX1) ermittelt werden.

7. Verfahren nach einem der vorangehenden Ansprüche, dadurch gekennzeichnet, dass am Ort des Empfängers (RX1) mehrere der Sendesignale ($s_{ij}$) verschiedener Sender überlagert sind.

**Fig. 1**

**Fig. 2**

Fig. 3